# FASCICULE DE BREVET EUROPEEN

(11) **EP 0 724 993 B1**
(45) Date de publication et mention de la délivrance du brevet: **19.05.1999**
(21) Numéro de dépôt: 96101197.0
(22) Date de dépôt: 29.01.1996
(51) Int. Cl.: B60S 1/52

(54) **Essuie-glace de véhicule automobile comportant une rampe d'arrosage modulaire**
Kraftfahrzeug-Scheibenwischer mit modularer Sprühvorrichtung
Windscreen wiper for motor vehicles having a modular spraying device

(30) Priorité: 31.01.1995 FR 9501199
(43) Date de publication de la demande: 07.08.1996
(73) Titulaire: VALEO SYSTEMES D'ESSUYAGE, 78321 La Verrière (FR)
(72) Inventeur: Boissac, Jean-Paul, F-86100 Chatellerault (FR)
(74) Mandataire: Gamonal, Didier

(56) Documents cités:
- US-A- 2 910 715
- US-A- 3 854 161
- AUTOMOTIVE ENGINEERING, vol. 78, no. 8, Août 1970, WARRENDALE (US), page 81 XP002001562 NEW PRODUCTS: "Windshield washer has 6 jets to each wiper blade"

## Description

La présente invention concerne un essuie-glace pour véhicule automobile muni d'une rampe d'arrosage modulaire.

L'invention concerne plus particulièrement un essuie-glace comportant un système pour la distribution de produit de lavage sur une vitre à essuyer d'un véhicule automobile, du type comportant une rampe longitudinale d'arrosage, sensiblement tubulaire, qui comporte un canal interne dans lequel circule le produit de lavage et des orifices d'aspersion de la vitre du véhicule, et du type dans lequel la rampe est fixée longitudinalement sur l'essuie-glace et est reliée à un circuit d'alimentation en produit de lavage sous pression par une canalisation d'alimentation.

Il est connu de projeter le liquide de lavage depuis des buses fixées sur une partie fixe du véhicule automobile telle que le capot.

Un tel dispositif présente l'inconvénient notable de faire appel à des buses qui sont nécessairement éloignées du pare-brise, ce qui rend difficile l'obtention d'un arrosage homogène du pare-brise.

De plus, le liquide projeté a tendance à être fortement rabattu vers le bas du pare-brise lorsque le véhicule roule à haute vitesse.

Pour remédier à cet inconvénient, il a été proposé d'intégrer le système de distribution de produit de lavage à l'essuie-glace, et notamment au balai d'essuie-glace, sous la forme d'une rampe d'arrosage.

Toutefois, cette nouvelle conception, si elle résoud les problèmes cités précédemment, oblige à la conception d'une rampe d'arrosage spécifique pour chaque type de véhicule, étant donné notamment que la longueur du balai d'essuie-glace varie selon les véhicules et selon le niveau d'équipement d'un même modèle. Cela ne fait donc que multiplier les coûts de conception, de fabrication et de gestion des stocks.

De plus, une telle rampe d'arrosage doit être reliée par une extrémité à une canalisation souple d'alimentation en produit de lavage qui est par ailleurs fixée au bras d'essuie-glace. La canalisation souple est donc susceptible de gêner le mouvement d'articulation du balai d'essuie-glace sur le bras d'essuie-glace.

L'invention a pour but de proposer une rampe d'arrosage dont la conception permet de limiter le nombre de composants spécifiques à chaque véhicule et qui comporte des moyens de liaison à la canalisation d'alimentation qui gênent peu le fonctionnement de l'articulation du balai d'essuie-glace sur le bras porte-balais.

Dans ce but, l'invention propose un essuie-glace du type précédemment décrit (Type divulgué, par exemple dans US-A-3,854,161 ou US-A-2,910,715), caractérisé en ce que la rampe comporte au moins un module d'aspersion et un corps principal de distribution qui est relié à la canalisation d'alimentation et qui est susceptible de recevoir à au moins une de ses extrémités opposées ledit module d'aspersion.

Selon des modes de réalisation de l'invention :
- Le corps de distribution comporte un canal interne qui débouche dans chacune de ses extrémités longitudinales et comporte une entrée de raccordement du canal interne à la canalisation d'alimentation agencée dans une de ses faces latérales ;
- un module d'aspersion comporte un canal interne débouchant à chacune de ses extrémités longitudinales et comporte des orifices d'aspersion ;
- pour le raccordement d'un module d'aspersion avec un autre module d'aspersion ou avec le corps de distribution, il est prévu un manchon tubulaire de raccordement dont les extrémités sont engagées respectivement dans des portions correspondantes des extrémités des canaux internes des éléments à raccorder ;
- le manchon de raccordement est réalisé venu de matière à l'une des extrémités du canal interne de chaque module d'aspersion et du corps de distribution ;
- le canal interne de la rampe se termine, au moins à l'une de ses extrémités, par un bouchon ;
- le canal interne de la rampe se termine, au moins à l'une de ses extrémités, par une buse de projection de liquide de lavage ;
- le corps de distribution est fixé sur un balai d'essuie-glace ;
- il est prévu des moyens complémentaires de fixation des modules d'aspersion sur le balai et/ou sur un bras d'essuie-glace.

L'invention propose également une rampe modulaire pour un essuie-glace du type qui vient d'être décrit.

D'autres caractéristiques et avantages de l'invention apparaîtront à la lecture de la description détaillée qui suit pour la compréhension de laquelle on se reportera aux dessins annexés dans lesquels :
- La figure 1 est une vue de dessus d'un essuie-glace muni d'une rampe modulaire selon l'invention ;
- la figure 2 est une vue en perspective éclatée d'une rampe modulaire selon l'invention ;
- la figure 3 est une vue en perspective éclatée d'un second mode de réalisation de l'assemblage des éléments d'une rampe modulaire selon l'invention ;
- la figure 4 est une vue en coupe axiale du corps principal de distribution d'une rampe modulaire selon l'invention.

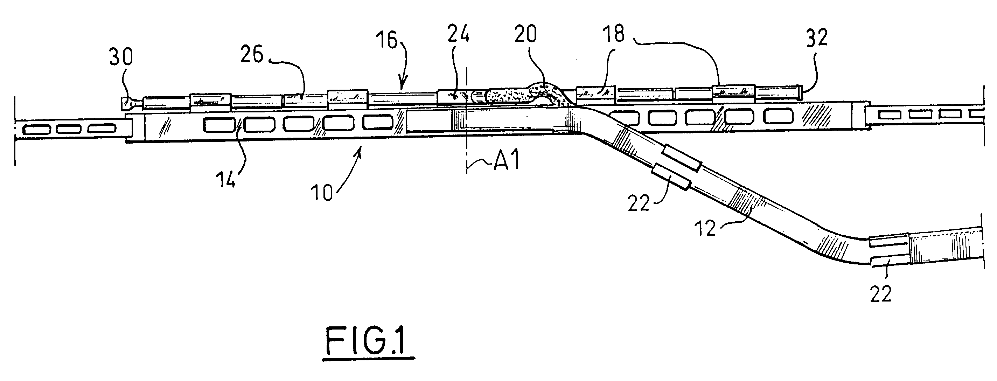

Sur la figure 1 on a représenté en vue de dessus un balai d'essuie-glace 10 monté articulé, autour d'un axe A1, sur l'extrémité d'un bras d'essuie-glace 12 par sa partie centrale 14.

Une rampe d'arrosage modulaire 16 selon l'invention est fixée le long d'une face latérale du balai d'essuie-glace 12 par des moyens de fixation connus tels que des pinces à emboîtement élastique 18.

La rampe modulaire 16 est reliée, par sa partie sensiblement centrale, proche de l'axe d'articulation A1 du balai d'essuie-glace 10 sur le bras d'essuie-glace 12, à une canalisation souple d'alimentation 20 qui est par ailleurs fixée le long du bras d'essuie-glace 12 par des agrafes 22 pour être reliée à un dispositif d'alimentation en produit de lavage sous pression (non représenté).

Cette disposition permet notamment d'éviter que la canalisation d'alimentation 20 n'entrave le mouvement relatif de rotation du balai d'essuie-glace 10 par rapport au bras d'essuie-glace 12.

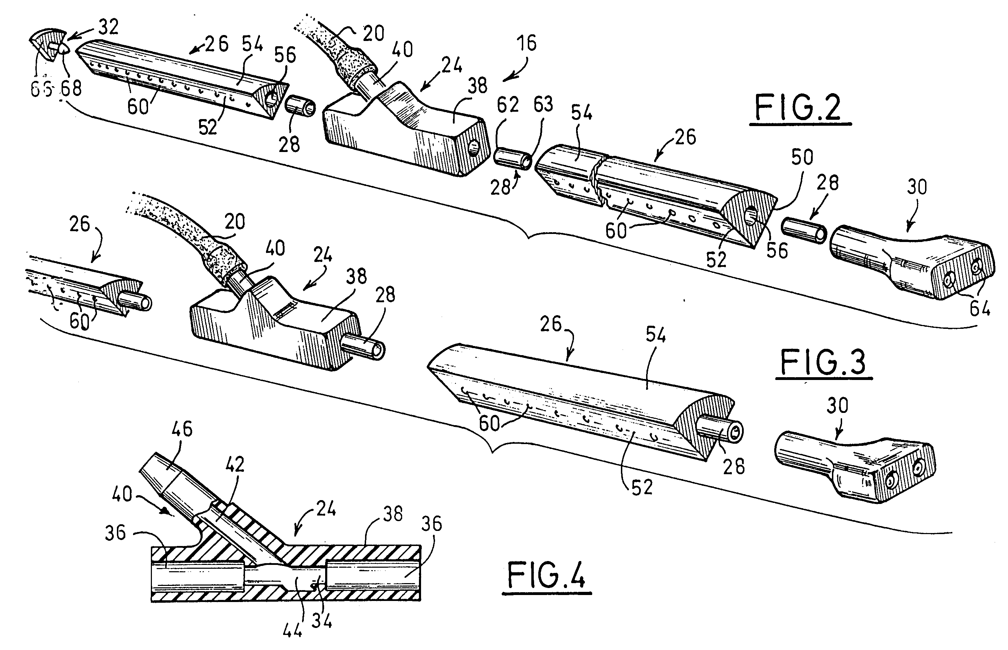

Sur la figure 2 on a représenté en perspective éclatée un mode préféré de réalisation d'une rampe modulaire selon l'invention.

La rampe modulaire 16 comporte notamment un corps principal de distribution 24 qui est également représenté en section axiale sur la figure 4.

La rampe 16 comporte également des modules d'aspersion 26, des manchons tubulaires de raccordement 28, une buse d'extrémité 30 et un bouchon d'extrémité 32.

Le corps principal de distribution 24 présente une forme générale parallélipipédique et comporte un canal cylindrique interne 34 qui le traverse de part en part selon son axe longitudinal.

Le canal interne 34 comporte en ses deux extrémités des portions de diamètre élargi 36.

Le corps de distribution 24 comporte par ailleurs, sur une face supérieure 38, une entrée d'alimentation 40 qui est inclinée par rapport à l'axe du canal interne 34 et qui comporte un canal d'alimentation 42 qui débouche dans la partie centrale 44 du canal interne 34.

L'entrée d'alimentation 40 comporte une extrémité de diamètre extérieur réduit 46 destinée à recevoir une canalisation souple d'alimentation 20.

Le corps principal de distribution 24 est prolongé à ses deux extrémités longitudinales opposées par un module d'aspersion 26.

Un module d'aspersion 26 comporte une face latérale 50 en vis-à-vis du balai d'essuie-glace 10, une face inférieure 52 en vis-à-vis du pare-brise du véhicule automobile et une face supérieure 54 dont le profil peut être prévu pour jouer un rôle de déflecteur aérodynamique.

Le module d'aspersion 26 est traversé axialement par un canal interne 56 et des orifices d'aspersion 60 sont percés, à espace régulier, transversalement entre le canal interne 56 et la face inférieure 52 du module d'aspersion.

Des manchons tubulaires de raccordement 28 permettent de relier un module d'aspersion 26 au corps de distribution 24, ou à un deuxième module d'aspersion.

Pour relier par exemple un module d'aspersion 26 au corps de distribution 24, un manchon tubulaire 28 est emmanché par l'une de ses extrémités 62 dans une extrémité de diamètre élargie 36 du canal interne 34 du corps de distribution 24 et par l'autre 63 de ses extrémités dans une extrémité du canal interne 56 du module d'aspersion 26.

Le module d'aspersion 26 est ainsi fixé sur le corps principal 24 et, de plus, le manchon tubulaire 28 assure la continuité du canal interne dans les deux éléments.

Les assemblages peuvent être réalisés par emmanchement à force et/ou par collage ou thermofusion.

La rampe modulaire 16 peut donc présenter une longueur variable suivant le nombre de modules d'aspersion assemblés et être adaptée ainsi facilement à chaque type de véhicule.

A ses extrémités, la rampe d'arrosage 16 doit être terminée par une buse 30 ou par un bouchon 32.

La buse 30 est fixée à l'extrémité d'un module d'aspersion 26 ou sur le corps de distribution 24 par un manchon de raccordement 28 qui permet d'alimenter la buse 30 en produit de lavage.

La buse 30 comporte à son extrémité deux gicleurs axiaux 64 dont l'orientation est réglable, ce qui permet d'arroser les zones périphériques du pare-brise 14.

Le bouchon 32 comporte un flanc 66 qui présente une forme similaire à celle d'une section transversale d'un module d'aspersion 26 et un obturateur 68 qui s'étend perpendiculairement au flanc 66 et qui est prévu pour être emmanché à force dans l'extrémité du canal interne du corps de distribution 24 ou d'un module d'aspersion 26.

Pour obtenir l'arrosage du pare-brise, il suffit d'injecter le produit de lavage sous pression dans la rampe modulaire par l'entrée d'alimentation 40 du corps de distribution 24.

Le produit se répartit alors dans le canal interne des différents éléments qui sont reliés entre eux par des manchons tubulaires 28 et le produit de lavage sous pression est distribué, au travers des orifices d'aspersion 60 et des gicleurs 64, sur toute la surface balayée par la rampe lors du mouvement du balai d'essuie-glace 10.

Cette conception d'une rampe modulaire permet, en plus des avantages déjà cités, de fabriquer les modules d'aspersion 26 par extrusion en continu et de les découper ensuite à la longueur déterminée, ce qui permet d'obtenir des cadences de fabrication beaucoup plus élevées que le moulage.

Sur la figure 3 est représentée une variante de réalisation d'une rampe modulaire 16 selon l'invention dans laquelle le manchon tubulaire 28 est réalisé venu de matière à l'une des extrémités des canaux internes de chacun des modules d'aspersion 26 et du corps de distribution 24.

La deuxième extrémité du canal interne de chaque élément comporte dans ce cas une portion de diamètre élargi (non représentée) qui est prévue pour recevoir le manchon de raccordement d'un élément à raccorder.

Il est de plus nécessaire de prévoir un deuxième type de bouchon "femelle" non représenté pour obturer le manchon d'extrémité de la rampe modulaire 16.

## Revendications

1. Essuie-glace comportant un système pour la distribution de produit de lavage sur une vitre à essuyer d'un véhicule automobile, du type comportant une rampe longitudinale d'arrosage (16), sensiblement tubulaire, qui comporte un canal interne dans lequel circule le produit de lavage et des orifices d'aspersion (60) de la vitre du véhicule et du type dans lequel la rampe (16) est fixée longitudinalement sur l'essuie-glace (10) et est reliée à un circuit d'alimentation en produit de lavage sous pression par une canalisation d'alimentation (20), caractérisé en ce que la rampe (16) comporte au moins un module d'aspersion (26) et un corps principal de distribution (24) qui est relié à la canalisation d'alimentation (20) et qui est susceptible de recevoir à au moins une de ses extrémités longitudinales opposées ledit module d'aspersion (26).

2. Essuie-glace selon la revendication 1, caractérisé en ce que le corps de distribution (24) comporte un canal interne (34) qui débouche dans chacune de ses extrémités longitudinales (36) et comporte une entrée (40) de raccordement du canal interne (34) à la canalisation d'alimentation (20), agencée dans une de ses faces latérales (38).

3. Essuie-glace selon la revendication 2, caractérisé en ce qu'un module d'aspersion (26) comporte un canal interne (56) débouchant à chacune de ses extrémités longitudinales et comporte des orifices d'aspersion (60).

4. Essuie-glace selon la revendication 3, caractérisé en ce que pour le raccordement d'un module d'aspersion (26) avec un autre module d'aspersion (26) ou avec le corps de distribution (24), il est prévu un manchon tubulaire de raccordement (28) dont les extrémités (63, 64) sont engagées respectivement dans des portions correspondantes (58, 36) des extrémités des canaux internes (56, 34) à raccorder.

5. Essuie-glace selon la revendication 4, caractérisé en ce que le manchon de raccordement (28) est réalisé venu de matière à l'une des extrémités du canal interne de chaque module d'aspersion (26) et du corps de distribution (24).

6. Essuie-glace selon l'une quelconque des revendications précédentes, caractérisé en ce que le canal interne de la rampe (16) se termine, au moins à l'une de ses extrémités, par un bouchon (32).

7. Essuie-glace selon l'une quelconque des revendications précédentes, caractérisé en ce que le canal interne de la rampe (16) se termine, au moins à l'une de ses extrémités, par une buse de projection de liquide de lavage (30).

8. Essuie-glace selon l'une quelconque des revendications précédentes, caractérisé en ce que le corps de distribution (24) est fixé sur un balai d'essuie-glace (12).

9. Essuie-glace selon la revendication 8, caractérisé en ce qu'il est prévu des moyens complémentaires de fixation des modules d'aspersion (26) sur le balai (12) et/ou sur un bras d'essuie-glace.

10. Rampe d'arrosage modulaire pour un essuie-glace (10) selon l'une quelconque des revendications précédentes.

## Claims

1. Windscreen wiper having a system for distributing washing product on a motor vehicle window to be wiped, of the type having a substantially tubular longitudinal spray pipe (16) which has an internal channel in which the washing product flows and orifices (60) for spraying the vehicle window and of the type in which the pipe (16) is fixed longitudinally to the wiper (10) and is connected to a circuit for supplying pressurised washing product through a supply duct (20), characterised in that the pipe (16) has at least one spray module (26) and a main distribution body (24) which is connected to the supply duct (20) and which is able to receive, at at least one of its opposing longitudinal ends, the said spray module (26).

2. Wiper according to Claim 1, characterised in that the distribution body (24) has an internal channel (34) which opens out in each of its longitudinal ends (36) and has an inlet (40) for connecting the internal channel (34) to the supply duct (20), arranged in one of its lateral faces (38).

3. Wiper according to Claim 2, characterised in that a spray module (26) has an internal channel (56) opening out at each of its longitudinal ends and has spray orifices (60).

4. Wiper according to Claim 3, characterised in that, for connecting a spray module (26) with another spray module (26) or with the distribution body (24), a tubular connecting sleeve (28) is provided whose ends (63, 64) are engaged respectively in corresponding portions (58, 36) of the ends of the internal channels (56, 34) to be connected.

5. Wiper according to Claim 4, characterised in that the connecting sleeve (28) is produced in one piece at one of the ends of the internal channel of each spray module (26) and of the distribution body (24).

6. Wiper according to any one of the preceding claims, characterised in that the internal channel in the pipe (16) terminates, at least at one of its ends, in a plug (32).

7. Wiper according to any one of the preceding claims, characterised in that the internal channel in the pipe (16) terminates, at least at one of its ends, in a nozzle for spraying washing liquid (30).

8. Wiper according to any one of the preceding claims, characterised in that the distribution body (24) is fixed to a wiper blade (12).

9. Wiper according to Claim 8, characterised in that complementary means of fixing the spray modules (26) to the blade (12) and/or to a wiper arm are provided.

10. Modular spray pipe for a wiper (10) according to any one of the preceding claims.

## Patentansprüche

1. Scheibenwischer mit einem System zur Verteilung von Waschflüssigkeit auf einer zu wischenden Scheibe eines Kraftahrzeugs, umfassend eine im wesentlichen rohrförmige Längssprühvorrichtung (16), die einen inneren Kanal, in dem die Waschflüssigkeit zirkuliert, und Sprühöffnungen (60) zum Besprühen der Fahrzeugscheibe umfaßt, wobei die Sprühvorrichtung (16) in Längsrichtung am Scheibenwischer (10) befestigt und mit einem Kreislauf für die Zufuhr der unter Druck stehenden Waschflüssigkeit durch eine Zuleitung (20) verbunden ist, **dadurch gekennzeichnet**, daß daß die Sprühvorrichtung (16) wenigstens ein Sprühmodul (26) und einen Hauptverteilungskörper (24) umfaßt, der mit der Zuleitung (20) verbunden ist und der an wenigstens einem seiner gegenüberliegenden Enden das besagte Sprühmodul (26) aufnehmen kann.

2. Scheibenwischer nach Anspruch 1 , **dadurch gekennzeichnet,** daß der Verteilungskörper (24) einen inneren Kanal (34) umfaßt, der in jedem seiner Längsenden (36) mündet, und einen Einlaß (40) für den Anschluß des inneren Kanals (34) an die Zuleitung (20) umfaßt, der in einer seiner Seitenflächen (38) angeordnet ist.

3. Scheibenwischer nach Anspruch 2 , **dadurch gekennzeichnet,** daß ein Sprühmodul (26) einen inneren Kanal (56) umfaßt, der an jedem seiner Längsenden mündet, und Sprühöffnungen (60) umfaßt.

4. Scheibenwischer nach Anspruch 3 , **dadurch gekennzeichnet,** daß für den Anschluß eines Sprühmoduls (26) an ein anderes Sprühmodul (26) oder an den Verteilungskörper (24) eine rohrförmige Anschlußmuffe (28) vorgesehen ist, deren Enden (63, 64) in entsprechende Abschnite (58, 36) der Enden der anzuschließenden innerne Kanäle (56, 34) eingesetzt sind.

5. Scheibenwischer nach Anspruch 4 , **dadurch gekennzeichnet,** daß die Anschlußmuffe (28) einstückig an einem der Enden des inneren Kanals jedes Sprühmoduls (26) und des Verteilungskörpers (24) ausgeführt ist.

6. Scheibenwischer nach einem der vorangehenden Ansprüche, **dadurch gekennzeichnet**, daß der innere Kanal der Sprühvorrichtung (16) wenigstens an einem seiner Enden in einem Verschluß (32) endet.

7. Scheibenwischer nach einem der vorangehenden Ansprüche, **dadurch gekennzeichnet**, daß der innere Kanal der Sprühvorrichtung (16) wenigstens an einem seiner Enden in einer Düse zum Aufspritzen der Waschflüssigkeit (30) endet.

8. Scheibenwischer nach einem der vorangehenden Ansprüche, **dadurch gekennzeichnet**, daß der Verteilungskörper (24) an einem Wischerblatt befestigt (12) ist.

9. Scheibenwischer nach Anspruch 8 , **dadurch gekennzeichnet,** daß formschlüssige Mittel zur Befestigung der Sprühmodule (26) am Wischerblatt (12) und/oder an einem Scheibenwischerarm vorgesehen sind.

10. Modulare Sprühvorrichtung für einen Scheibenwischer (10) nach einem der vorangehenden Ansprüche.
